# EUROPEAN PATENT SPECIFICATION

(11) **EP 4 046 947 B1**
(45) Date of publication and mention of the grant of the patent: **25.12.2024**
(21) Application number: 22075003.8
(22) Date of filing: 10.02.2022
(51) Int. Cl.: B65G 69/00

(54) **DEVICE FOR THE MANUAL BLOCKING OF THE WHEEL OF A TRUCK ON A LANE IN FRONT OF A FACADE WITH A LOADING AND UNLOADING PLATFORM**
VORRICHTUNG ZUM MANUELLEN BLOCKIEREN DES RADES EINES LASTKRAFTWAGENS AUF EINER SPUR VOR EINER FASSADE MIT EINER BE- UND ENTLADEPLATTFORM
DISPOSITIF POUR LE BLOCAGE MANUEL DE LA ROUE D'UN CAMION SUR UNE VOIE DEVANT UNE FACADE AVEC UNE PLATE-FORME DE CHARGEMENT ET DE DÉCHARGEMENT

(30) Priority: 18.02.2021 NL 2027580
(43) Date of publication of application: 24.08.2022
(73) Proprietor: Hörmann Alkmaar BV, 1822 BB Alkmaar (NL)
(72) Inventor: Wolkers, Frank, 1721 HE Broek op Langedijk (NL); Blom, Robbert Pieter Hendrikus, 1738 CK Waarland (NL); Koopman, Arie Pieter Cornelis, 1771 RW Wieringerwerf (NL)
(74) Representative: Koomen, M.J.I.

(56) References cited:
- EP-A1- 3 028 966
- US-A1- 2010 170 754
- US-A1- 2011 233 006

## Description

The present invention relates to a device for the locking of the wheel of a truck on a lane in front of a façade with a loading and unloading platform, with a guide extending parallel to and alongside the lane and a carriage movable on the guide with a locking arm that is movable between a starting position, in which the locking arm extends alongside the lane, and an end position, in which the locking arm partially extends above the lane and therein can rest blocking against the wheel of a truck, wherein the guide and the carriage are provided with co-operating locking means for bringing about a locking of the carriage to the guide,
wherein the device is provided with means by which, by moving of the locking arm from the starting position to the end position, the locking means are operated,
wherein one of the locking means is mounted onto an adjusting organ that is movably provided onto the carriage and which has one or more unevennesses provided in the surface of a part thereof, which co-operate with one or more unevennesses provided in the surface of a part of the locking arm, such, that by a moving of the locking arm the one or more unevennesses provided onto the locking arm are moved over the one or more unevennesses provided onto the adjusting organ, as a result of which the adjusting organ is brought into movement, and the locking means mounted to the adjusting organ is brought into and out of the engagement with the locking means provided onto the guide, with at least one spring being provided, which on the one side is mounted to the carriage and on the other side to the adjusting organ, such, that bringing the locking means that is mounted onto the adjusting organ into respectively out of engagement with the locking means that is provided to the guide takes place under spring force, wherein the adjusting organ comprises a body at the upper side of which the one ore more unevennesses are provided.

Such a device is known from the European patent application EP 3 028 966 A.

It is an object of the present invention to provide a device with an improved mechanism for the bringing about and undoing again of the locking of the carriage to the guide. A further object is to provide a simpler manner of operation of the device.

The device according to the invention as defined in claim 1 is characterized, in that the adjusting organ is provided with at least one, two, three, or more lead-through openings with a guide pen mounted to the carriage being led therethrough, and with respect to which the adjusting organ is movable in vertical direction.

According to an embodiment of the invention the unevennesses are formed by one or more cams and one or more recesses, and, according to a further embodiment, the one or more cams and recesses provided onto the locking arm have the form of a cam disc and the body that is provided onto the adjusting organ is formed by a counter cam disc.

According to another embodiment of the invention the locking arm has the form of a rod or beam, the one outer end of which is intended to lie in the end position against the wheel of the truck, and the other outer end of which has the form of an axis of rotation that is taken up in the carriage, wherein the cam disc is provided onto the bottom side of this axis of rotation.

According to another embodiment of the invention the locking arm is provided with a control arm by means of which the locking arm can be rotated from out of the starting position to the end position and back again.

According to a further embodiment of the invention the control arm is provided at the upper side of the axis of rotation, while according to a further characteristic a hinge is mounted into which the control arm is provided, in such a way, that the control arm can be turned in vertical direction between two end positions.

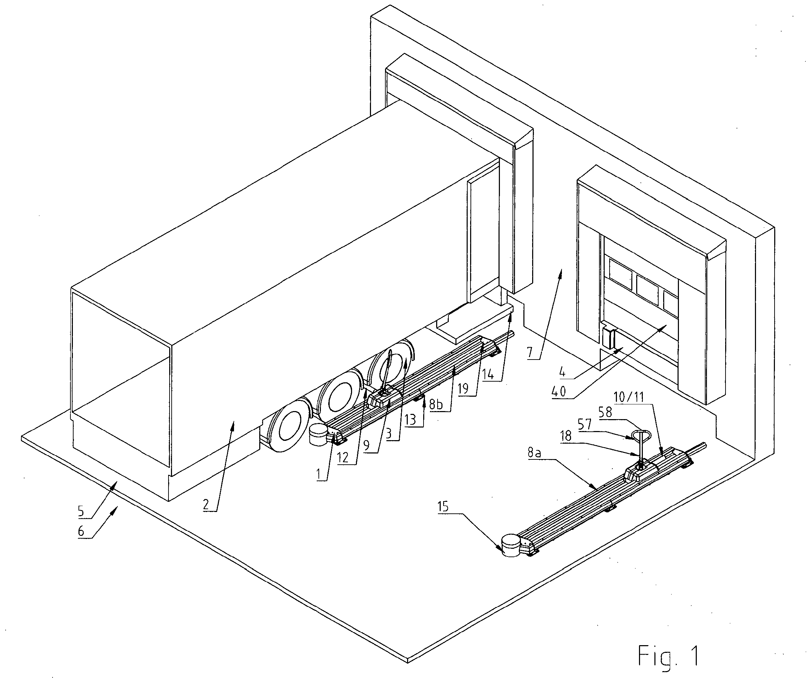

Further characteristics and particulars of the device according to the invention will be described with reference to the drawings of an example of an embodiment. Figure 1 shows a perspective view of a loading and unloading platform with shown thereon two lanes, alongside each other with each a device according to the invention.

Figure 2 shows a perspective view of a guide with thereon a device according to the invention.

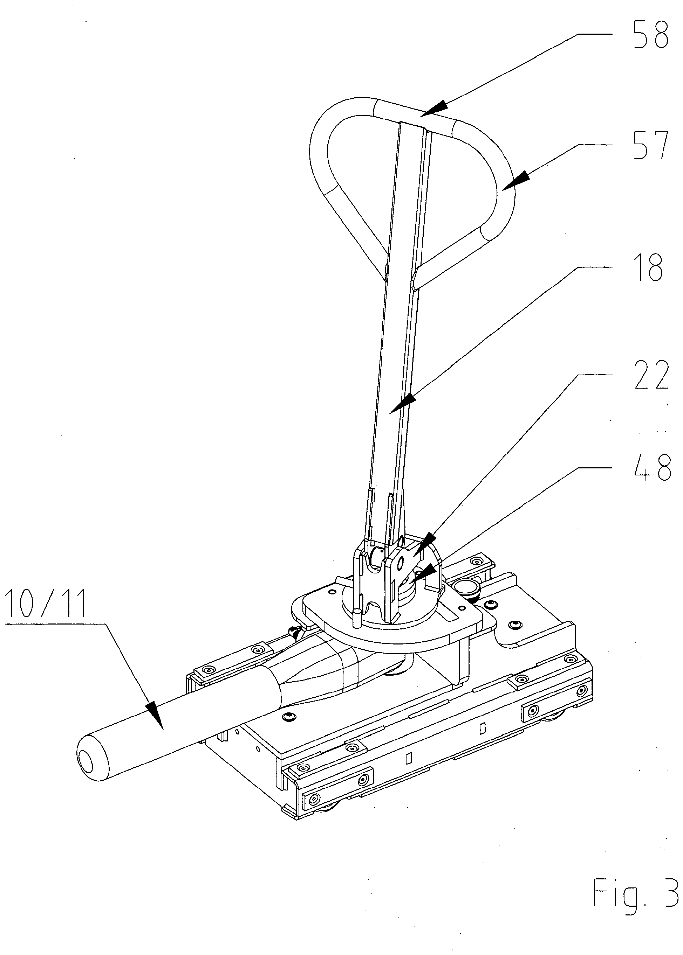

Figure 3 shows a perspective view of an example of an embodiment of the device according to the invention, wherein the locking arm is rotated in the starting position.

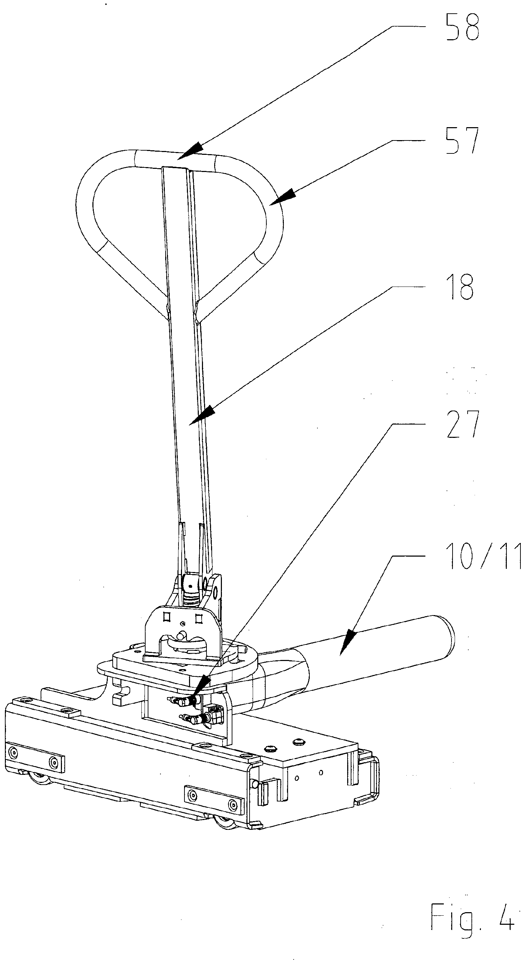

Figure 4 shows a perspective view of the other side of the example of an embodiment of the device according to the invention, wherein the locking arm is rotated in the end position.

Figure 5a shows a section of a detail of the device according to the invention, with a control arm.

Figure 5b shows a section of a detail of the device according to figure 5a, with a control arm that is rotated downwards, indicated in dashed line.

Figure 6 shows a perspective view from below, in part in section, of the device.

Figure 7 shows a perspective view from above, in part in section, of a detail of the device.

Figure 8.a shows a perspective side view from above, partially taken apart, of a part of the device according to the invention.

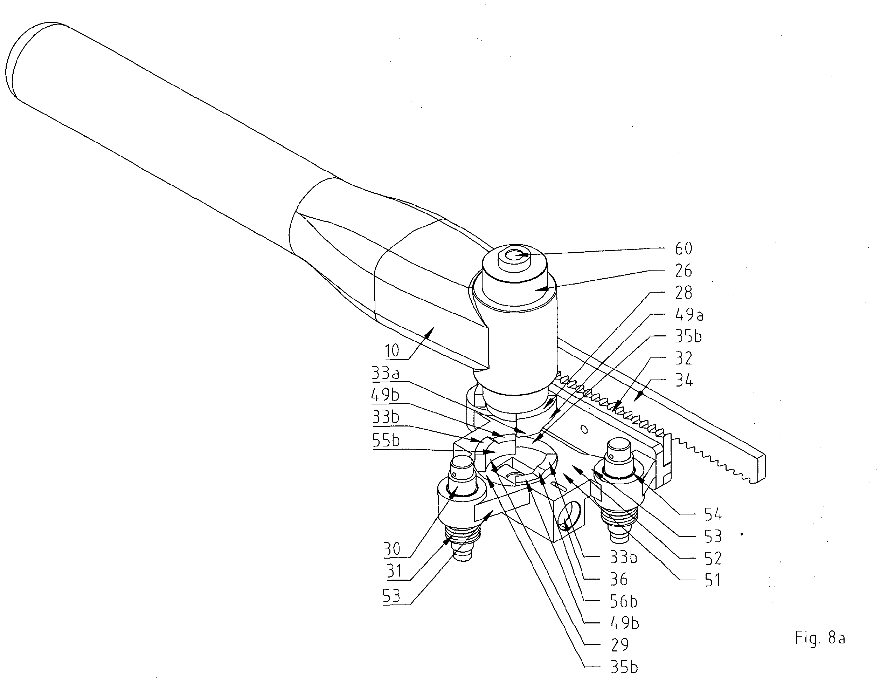

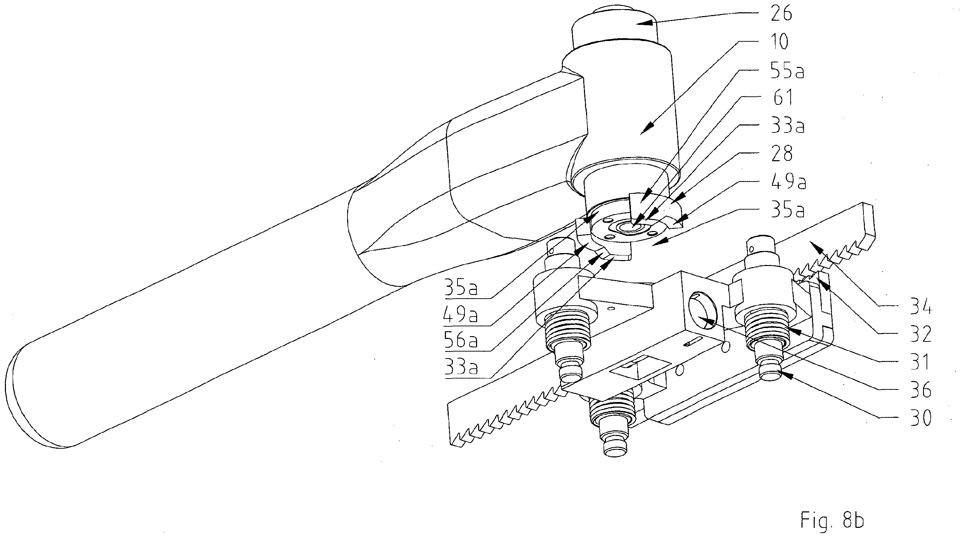

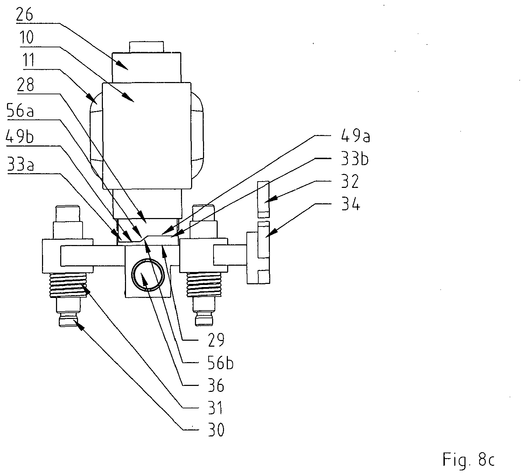

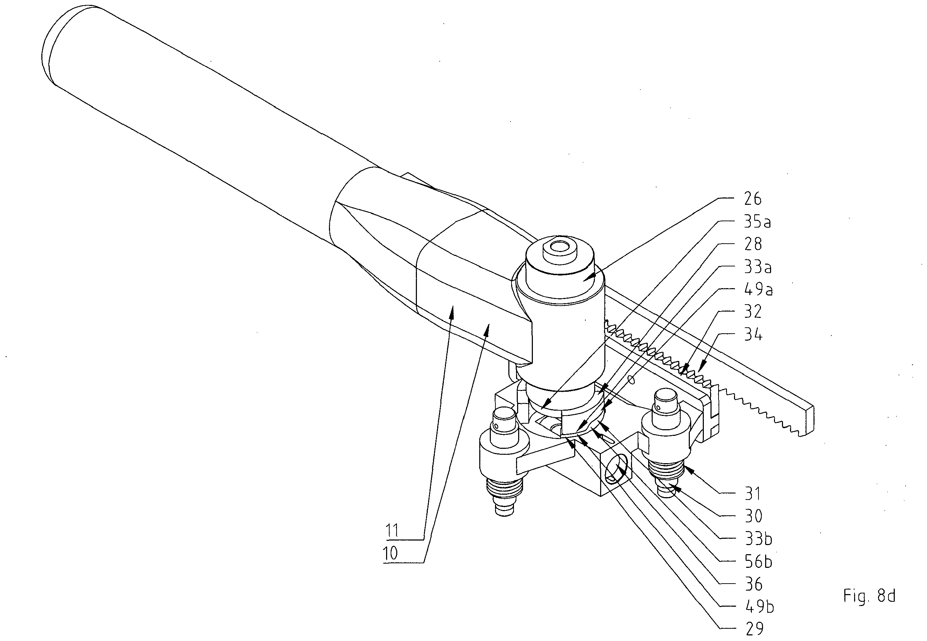

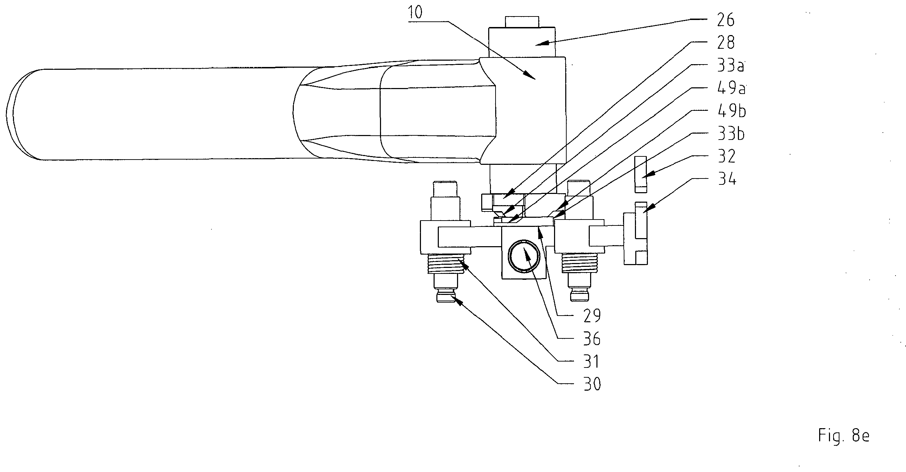

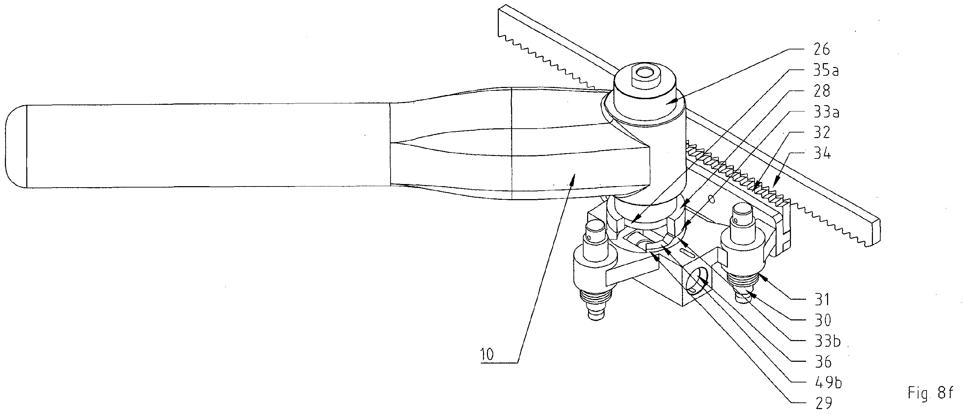

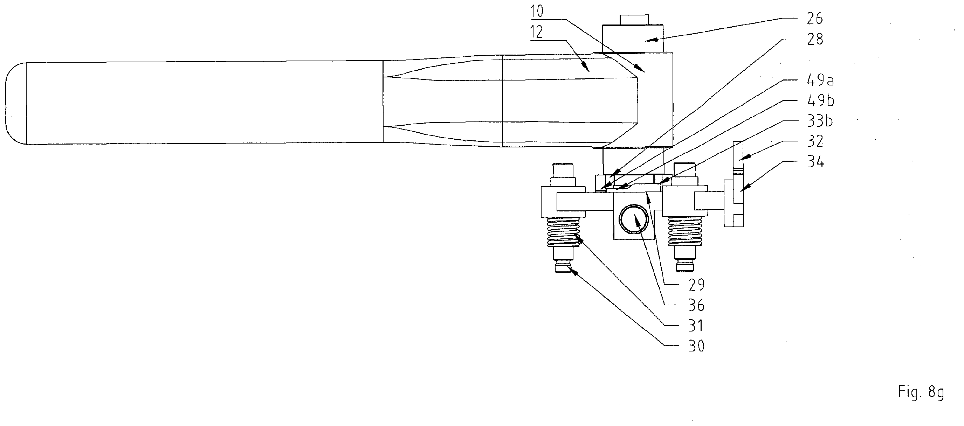

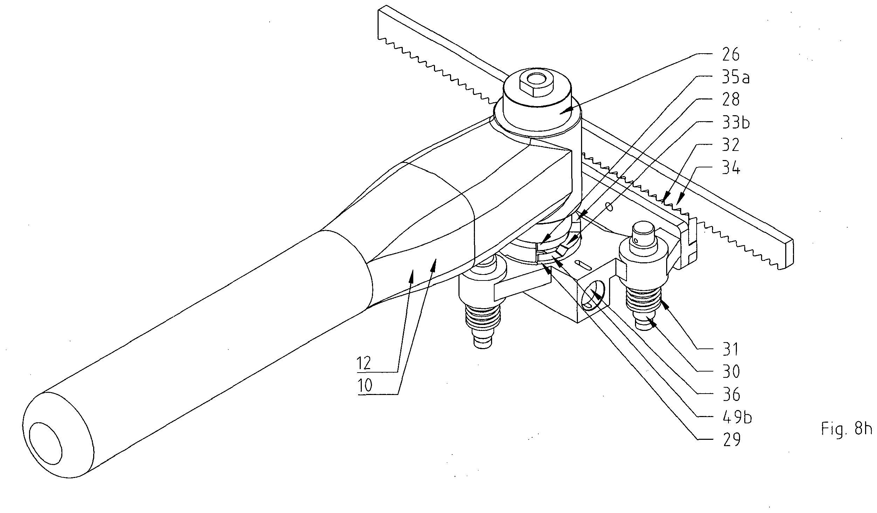

Figure 8.b shows a perspective side view from below, partially taken apart, of a part of the device.

Figure 8.c shows partially in section a front view of a detail of the device, in which the locking arm is in the starting position.

Figure 8.d shows a perspective side view from above, partially taken apart, of a part of the device, in which the locking arm is in the starting position.

Figure 8.e shows partially in section a front view of a detail of the device, in which the locking arm has been partially turned out towards the end position.

Figure 8.f shows a perspective side view from above, partially taken apart, from a part of the device, in which the locking arm has been partially turned out.

Figure 8.g shows partially in section a front view of a detail of the device, in which the locking arm is in the end position.

Figure 8.h. shows a perspective side view from above, partially taken apart, of a part of the device, with the locking arm in the end position.

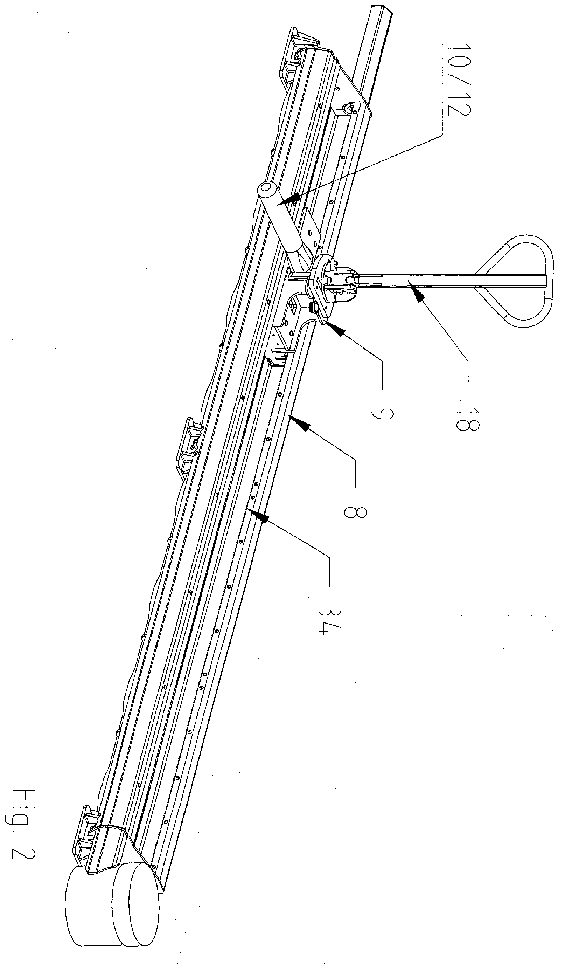

As can be seen in figure 1 the device 1 for the locking of the wheel 3 of a truck 2 on a lane 5 in front of a façade 7 with a loading and unloading platform 4 comprises a guide 8, extending alongside and parallel to the lane 5 from a road side 6 to a façade side 7. As can be seen in the figures 1 and 2 a carriage 9 is movable on the guide 8 with rolls. The carriage 9 has a locking arm 10 that is moveable between a starting position 11, shown in figure 1 in the drawing of the guide 8a on the right, in which the locking arm 10 extends alongside the lane 5, and an end position 12, shown in figure 1 in the drawing of the guide 8b on the left near the truck and in figure 2, in which the locking arm 10 extends above the lane 5 and therein can rest blocking against the wheel 3 of the truck 2.

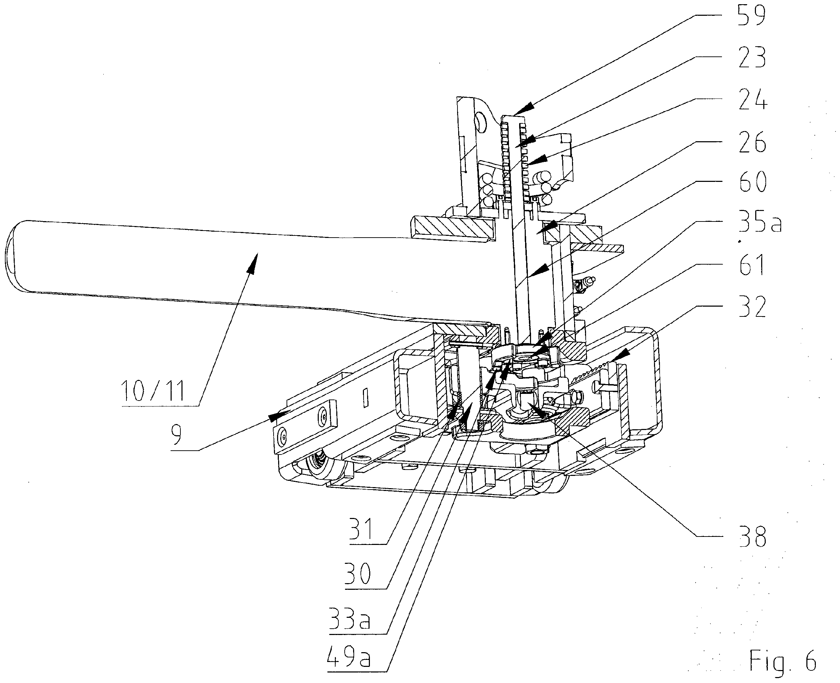

In the example of an embodiment shown in figure 1 the locking arm 10 has the form of a rod or beam, the one outer end of which is intended to lie in the end position against the wheel 3 of the truck, and the other outer end of which has the form of an axis of rotation 26 that is taken up in the carriage 9, as can be seen in figure 6.

The locking arm 10 is provided in such a way, that this can only be rotated sideways in the direction towards the road side 6. Onto the locking arm 10 further a control arm 18 is mounted, by means of which the locking arm 10 can be rotated sideways.

Onto the bottom side of the axis of rotation 26 of the locking arm 10, to be seen in figure 8b, all round unevennesses 33a, 35a, 49a are provided. In the example of an embodiment shown these are taken up in a cam disc 28. This cam disc 28 rotates along with the rotating of the locking arm 10.

The guide 8 and the carriage 9 are provided with co-operating locking means for bringing about a locking of the carriage 9 to the guide 8. As can be seen in figure 2 in this example of an embodiment a toothing 34 is provided to the guide 8.

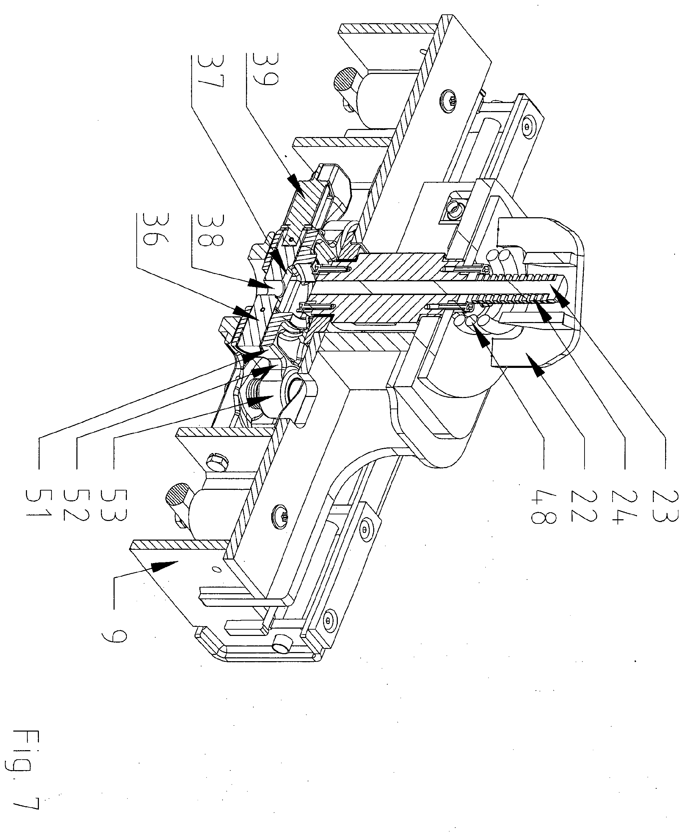

The carriage 9 is provided with an adjusting organ 51 that is movable up and down relative to the carriage 9, as can be seen in the figures 7 and 8a.

Onto the adjusting organ 51 a counter toothing 32 is mounted.

The adjusting organ 51 comprises at its upper side all round unevennesses 33b, 35b, 49b. In the example of an embodiment shown these have the form of a counter cam disc 29.

Further, the adjusting organ 51 is provided with, in this example of an embodiment, three, along a circumference area 52 equally distributed, radially extending legs 53. These legs 53 are each provided with a lead-through opening 54 with led therethrough a guide pin 30 that is mounted to the carriage 9, and relative to which the adjusting organ 51 is movable in vertical direction. The guide pins 30 are provided with springs 31 by means of which the counter cam disc 29 is pushed upwards. The counter cam disc 29 is only movable up and down in vertical direction, and cannot rotate.

The toothing 34 and the counter toothing 32 are positioned in such a way, that at a movement downwards of the adjusting organ 51 and the counter cam disc 29 the teeth of the counter toothing 32 move away from the teeth of the toothing 34. In the opposite, at a movement upwards of the counter cam disc 29 the teeth of the counter toothing 32 move in the direction of the teeth of the toothing 34.

As can be seen in the figures, around the guide pins 30 springs 31 are provided. These push the counter cam disc 29 upwards and pull the counter toothing 32 into the engagement with the toothing 34. Keeping the counter toothing 32 out of engagement with the toothing 34 therefore has to take place against the force of the springs 31.

The cam disc 28 is provided with two cams 55a that are positioned opposite one another, wherein each cam 55a comprises a low cam part 49a, a high cam part 33a and an inclined connecting part 56a extending in between, wherein the cams 55a are separated from each other by recesses 35a being provided on both sides.

The counter cam disc 29 is provided with two cams 55b that are positioned opposite one another, wherein each cam 55b comprises a low cam part 49b, a high cam part 33b and an inclined connecting part 56b extending in between, wherein the cams 55b are separated from each other by recesses 35b being provided on both sides.

The position of the locking arm 10 determines the state of the locking of the carriage 9 to the guide 8, one and the other as follows.

The cams 55a, 55b and the recesses 35a, 35b on the cam disc 28 respectively the counter cam disc 29 are positioned such, that when the locking arm 10 is in the starting position 11, the low cam parts 49a of the cam disc 28 stand on the low cam parts 49b of the counter cam disc 29. In this position the counter cam disc 29, and with that the counter toothing 32 is held downwards, out of the engagement with the toothing 34, wherein the carriage 9 is freely slidable over the guide 8.

When the locking arm 10 is turned out of the starting position, the high cam parts 33a of the cam disc 28 move over the inclined ascending connecting parts 56b in between the low cam parts 49b and the high cam parts 33b on the counter cam disc 29 to a position in which the high cam parts 33a find themselves on the high cam parts 33b of the counter cam disc 29. By this the counter cam disc 29 and therewith the counter toothing 32 is moved downwards, against the pressure of the springs 31. Because this spring pressure has to be overcome in order to turn the locking arm out of the starting position, the locking arm 10 will never be able to rotate itself out of the starting position. Therefore this sees to it that the locking arm by itself remains positioned in the starting position. The operator however can overcome this force easily.

In this position, in which the high cam parts 33a of the cam disc 28 stand on the high cam parts 33b of the counter cam disc 29, the locking arm 10 takes up an angle relative to the guide between approximately 10 ° to 85 °. The locking arm then is not yet rotated completely to the end position. The high cam parts relative to each other remain standing in this position, until the locking arm 10 is rotated completely into the end position 12.

The cams 55a, 55b and the recesses 35a, 35b on the cam disc 28 respectively the counter cam disc 29 are positioned in such a way, that when the locking arm 10 takes up an angle relative to the guide 8 of 90 °, and is in the end position, the high cam parts 33a of the cam disc 28 fall in the recesses 35b of the counter cam disc 29 and the high cam parts 33b of the counter cam disc 29 fall in the recesses 35a of the cam disc 28. The counter cam disc 29 moves upwards by the pressure of the springs 31, and therewith also the counter toothing 32 that is connected to the counter cam disc 29, wherein the counter toothing 32 engages the toothing 34 of the guide. The side walls of the high cam parts 33a, 33b lie against the side walls of the recesses 35a, 35b, that is to say the high cam parts 33a, 33b and the recesses 35a, 35b have a geometry such, that the cam parts 33a, 33b in this position are more or less locked up within the recesses 35a, 35b. Hereby the carriage is locked.

The geometry of the toothing is chosen such, that the carriage 9 can still be moved towards the façade, but not towards the road side. This is possible because the counter cam disc 29 is spring-mounted and because of this can "rattle" over the rack 34.

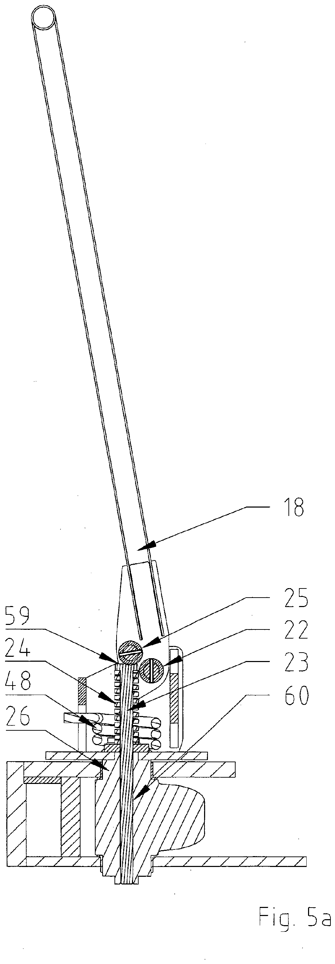

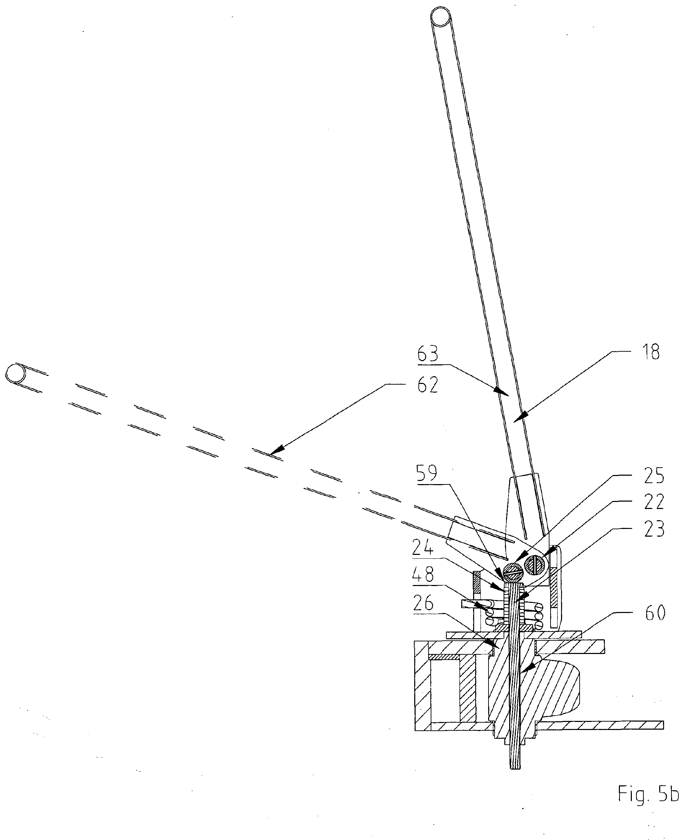

The locking arm 10 at the axis of rotation 26 is provided with a control arm 18, by means of which the locking arm 10 can be turned from the starting position to the end position and back again. At the upper side of the axis of rotation 26 a hinge 22 is mounted into which the control arm 18 is provided, in such a way, that the control arm 18 can turn in vertical direction between two end positions, to be seen in figure 5b. The control arm 18 has a handle 57 with a, substantially horizontally extending, rod-shaped handgrip 58, the longitudinal direction of which in the starting position of the locking arm 10 takes up an angle of about 30 ° relative to the guide, which is shown in figure 1 with the device on the guide 8a depicted on the right in the drawing.

The carriage is provided with a pin 23 with there around a compression spring 24 which rests with a bottom side on the upper side of the axis of rotation 26 and with an upper side leans against a contact surface 59 provided to the pin 23. The compression spring 24 pushes the pin 23 upwards against a thrust shaft 25, that is attached to the control arm 18, such that the control arm 18 under the spring pressure is held being turned upwards in an almost vertical position (about 10° relative to vertical).

In the axis of rotation 26 of the locking arm 10 and in the cam disc 29 lead-through openings 60 and 61 are provided, extending vertically and in line with each other. The pin 23 runs through this opening 60 in the axis of rotation 26 and through the opening 61 in the cam disc, and is moved downwards through the openings 60, 61 by a turning downwards of the control arm 18 to below. Owing to this, turning of the locking arm 10 and moving upwards and downwards of the control arm 18 is possible at the same time. By this the operator can operate the control arm 18 against the pressure of the spring 24 at the desired ergonomic height. Operating in the case of the bringing into the locking position comprises the following: the moving of the carriage 9 over the guide and the at the same turning of the locking arm 10 out of the starting position 11 to the end position 12 against the tire 3.

At the control arm 18 a system is provided for the generating of a counter force, in this example of an embodiment a torsion spring 48, which is chosen such, that when the locking arm 10, on being rotated in the direction towards the end position 12, has taken up an angle of approximately 70 ° relative to the guide 8 (see figure 8.e and figure 8.f), the torsion spring 48, at a further rotating of the locking arm in the direction towards the end position, generates a counter force of such a magnitude, that the rotating of the locking arm 10 completely to the end position, to an angle of 90° relative to the guide, is strongly impeded.

Instead of a torsion spring use can also be made of a gas spring or compression spring or such like. The magnitude of the counter force of the torsion spring 48 is such, that the covering of the last 20° of the distance of the locking arm from the starting position to the end position cannot be reached by turning of the locking arm, for instance by means of the turning of the control arm 18, by itself alone. To overcome the counter pressure the operator has to move the locking arm 10 against the tire 3 and to then move the carriage 9 towards the façade side 7.

The counter pressure to be generated by the torsion spring 48 is chosen such, that the operator can only place the locking arm directly against the tire 3, and by this therefore there never comes about a play between the locking arm 10 and the tire 3 that is larger than the pitch (of 10mm) present in the interlocking. The carriage thereby further is provided with a sensor 27, that can see whether there is an object in front of the locking arm, and with a sensor that can see whether the toothings have engaged correctly. By this the utmost safety is achieved.

Because the locking arm 18 is set under an angle of 30° relative to the locking arm, the operator intuitively is guided from the movement of the pushing of the carriage 9 and the turning of the locking arm 10, wherein the operator stands at the road side 6, to the turning and the covering of the last 20° of the rotating route of the locking arm 10 to the end position 12. This is the easiest by pulling the carriage by the control arm 18, wherein the operator therefore stands at the façade side 7. This applies then, when the operator holds de control arm 18 in the vertical position during the pushing and turning towards the tire. In the rotating position, in which the high cam parts 33a of the cam disc 28 stand on the high cam parts 33b of the counter cam disc 29, the locking arm 10 takes up an angle relative to the guide 8 between approximately 10°-85°. The locking arm 10 then is not yet completely turned out.

If the locking arm 10 then nevertheless already lies against the tire, while the locking arm has only yet rotated to in an angle of 70° relative to the guide 8, then the pressure of the operator towards the façade side 7, and the counter pressure of the tire 3, and the control arm 18, this therefore then being in an angle of 10° (30°-20°) relative to the guide 8, effect that the control arm 18 "claps" towards the façade side 7 and downwards and in that way the operator intuitively is guided to the pulling of the carriage and the pulling of the locking arm against the tire, and by this the complete turning out of the locking arm.

In this way the least possible play is allowed between locking arm and tire.

The device further is provided with unlocking means by which, when the high cam parts 33a of the cam disc 28 fall in the recesses 35b of the counter cam disc 29 and the high cam parts 33b of the counter cam disc 29 fall in the recesses 35a of the cam disc 28, the counter toothing 32 can be brought out of the engagement with the toothing 34.

To that end an operating organ is provided, by means of which the counter cam disc, against the spring force, can be pushed downwards and the counter toothing that is connected to the adjusting organ is brought out of engagement with the toothing.

In the example of an embodiment shown in the drawings, to that end in the axis of rotation 26 and in the cam disc 28 in the middle lead-through openings 60, 61 are provided, extending in line with each other, through which the pin 23 is led. When the control arm 18 is moved downwards the pin 23 is pushed downwards through the opening 60 in the axis of rotation 26 and the opening 61 in the cam disc 28, and thereby comes against a contact surface 37 that is provided in the upper surface of the counter cam disc 29, as shown in figure 7. By this the counter cam disc 29 is pushed downwards against the pressure of the springs 31 and by this also the counter toothing 32 is pulled out of the toothing 34.

If the control arm 18 is not moved downwards over more than a certain distance, then also the counter cam disc 29 therewith is not moved further downwards than this distance. In this situation the high cam parts 33a, 33b of the one cam disc 28, 29 are still find themselves in the recesses 35a, 35b of the other cam disc, be it partially, that is to say the side walls of the high cam parts 33a, 33b still lie against the side walls of the recesses 35a, 35b. The locking arm cannot be turned out of the end position. If, at this moment, the control arm 18 is released, this will pivot upwards again under the pressure of the springs, and by this also the counter cam disc 29 and the counter toothing 32, and the carriage is locked again.

If the control arm 18 is moved further downwards, the pin 23 will push the counter cam disc 29 further downwards, so far downwards, that the high cam parts 33a, 33b of the one cam disc no longer touch the recesses 35a, 35b of the other cam disc, also not sideways, and the operator can turn the locking arm 10 away from out of the end position 12. The moment the locking arm is out of the end position the upper sides of the high cam parts 33a of the cam disc 28 and the high cam parts 33b of the counter cam disc 29 lie against each other. The counter cam disc 29 and with this the counter toothing 32 are held downwards and the carriage is no longer locked. The moment the operator releases the control arm 18, the force of the torsion spring 48 will cause the locking arm 10 to turn by itself a part of the distance back in the direction of the starting position.

Instead of the embodiment described above it is also possible to provide the device, next to the control arm 18 for the rotating of the locking arm 10, with a separate operating handle for causing the moving of the adjusting organ. 51. One may think, for instance, of an operating handle that engages the adjusting organ or the counter cam disc 29, through a lead-through that is thereto provided in the housing (not shown in the figures).

An important result of the embodiment described in the figures however is that all the functions have been joined in one single operating organ, as a result of which the operation is very simple and the chance of a faulty operation (for instance an incorrect order) is almost excluded.

The length of the control arm 18 is chosen such, that by means of the lever linkage with little force a very large force can be generated towards the counter cam disc 29, as a result of which unlocking is always possible, even though the locked truck 2 yields very much pressure against the locking arm 10 and with that to the toothings. The operating force at the same time can be increased by the body weight of the operator.

The device further has means against unintended unlocking of the carriage 9 to the guide 8. To that end an interlock axis 36 is taken up in the counter cam disc 29, therein horizontally movable between two end positions, as can be seen in figure 7. A part of the interlock axis 36 forms a contact surface 37 for the pin 23, and an adjacent part comprises an opening or hole 38 for a lead-through for the pin 23. In a first position of the interlock axis 36 the contact surface 37 is positioned in the path of movement of the pin 23, and in this position the pin 23 can move the counter cam disc 29 downwards. In the second position of the interlock axis 36 the hole 38 is positioned in the path of movement of the pin 23. When the pin 23 is unintentionally moved downwards it can move down through the hole 38 in the interlock axis 36, without the counter cam disc 29 being pushed downwards. The interlock axis 36 is moved between the first position and the second position by means of a solenoid 39. In the case that the door of the dock is closed, this solenoid is not energized, and the hole 38 in the interlock axis 36 is not aligned with the pin 23.

The moment the door 40 of the dock 4 is open, the solenoid is energized and aligns the hole 38 of the interlock axis 36 with the pin 23. As soon as the control arm is moved down, the pin 23 moves down through this hole 38. The counter cam disc 29 and the counter toothing 32 then cannot be moved down and the system in this way cannot be unlocked. With this it is prevented that the carriage 9 is unintentionally unlocked. Because the operation in this case is lighter because the counter pressure of the springs 31 of the counter cam disc 29 does not have to be overcome, this immediately gives feedback to the user that the system cannot be unlocked.

The position of the interlock-axis can be surveilled by means of a sensor.

## Claims

1. Device [1] for the locking of the wheel [3] of a truck [2] on a lane [5] in front of a façade [7] with a loading and unloading platform [4], with a guide [[8] extending parallel to and alongside the lane [5] and a carriage [9] movable on the guide [8] with a locking arm [10] that is movable between a starting position [11], in which the locking arm [10] extends alongside the lane [5], and an end position [12], in which the locking arm [10] partially extends above the lane [5] and therein can rest blocking against the wheel [3] of a truck [2], wherein the guide [8] and the carriage [9] are provided with co-operating locking means [32, 34] for bringing about a locking of the carriage[9] to the guide [8],
wherein the device [1] is provided with means by which, by moving of the locking arm [10] from the starting position [11] to the end position [12] , the locking means are operated,
wherein one of the locking means is mounted on an adjusting organ [51] that is movably provided onto the carriage [9] and which has one or more unevennesses [33b, 35b, 49b] provided in the surface of a part thereof, which co-operate with one or more unevennesses [33a, 35a, 49a] provided in the surface of a part of the locking arm, such, that by a moving of the locking arm the one or more unevennesses [33a, 35a, 49a] provided onto the locking arm are moved over the one or more unevennesses [33b, 35b, 49b] provided onto the adjusting organ [51], as a result of which the adjusting organ is brought into movement, and the locking means [32] mounted to the adjusting organ [51] is brought into the engagement with the locking means [34] provided onto the guide [8], with at least one spring [31] being provided, which on the one side is mounted to the carriage [9] and on the other side to the adjusting organ [51], such, that the bringing of the locking means [32] that is mounted onto the adjusting organ [51] in engagement with the locking means [34] that is provided to the guide [8], takes place under spring force,
wherein the adjusting organ [51] comprises a body at the upper side of which the one or more unevennesses [33b, 35b, 49b] are provided, **characterized in that**, the adjusting organ [51] further is provided with at least one, two, three, or more lead-through openings [54] with a guide pin [30] mounted onto the carriage [9] being led there through, and with respect to which the adjusting organ [51] is movable in a vertical direction.

2. Device according to claim 1, **characterized in that** the lead-through openings [30] are provided along an outer circumference [52] .

3. Device according to claim 1 or 2, **characterized in that** at least one, two, three or more radially extending legs [53], being provided along the outer circumference [52], are provided in each of which a lead-through opening [54] is provided with a guide pin [30] being led there trough.

4. Device according to claim 3, **characterized in that** the legs [53] are provided along the outer circumference [52] substantially equally distributed.

5. Device according to claim 1, 2, 3 or 4, **characterized in that** the unevennesses [33a, 35a, 49a, 33b, 35b, 49b] are formed by one or more cams [55a, 55b] and one or more recesses [35a, 35b].

6. Device according to claim 5, **characterized in that** the one or more cams [55a] and recesses [35a] provided onto the locking arm [10] are comprised in a cam disc [28] and the body that is provided onto the adjusting organ is formed by a counter cam disc [29].

7. Device according to claim 6, **characterized in that** the locking arm [10] has the form of a rod or beam [10], the one outer end of which is intended to lie in the end position blocking against the wheel [3] of the truck [2], and the other outer end of which has the form of an axis of rotation [26] that is taken up in the carriage [9],
wherein the cam disc [28] is provided onto the bottom side of this axis of rotation [26].

8. Device according to one of the foregoing claims 6 and following, **characterized in that** the cam disc [28] is provided with two cams [55a] that are positioned opposite one another, wherein each cam [55a] comprises a low cam part [49a], a high cam part [33a] and an inclined connecting part [56a] extending in between,
wherein the cams [55a] are separated from each other by recesses [35a] being provided on both sides.

9. Device according to one of the foregoing claims 6 and following, **characterized in that** the counter cam disc [29] is provided with two cams [55b] that are positioned opposite one another, wherein each cam [55b] comprises a low cam part [49b], a high cam part [33b] and an inclined connecting part [56b] extending in between,
wherein the cams [55b] are separated from each other by recesses [35b] being provided on both sides.

10. Device according to one of the foregoing claims 6 and following, **characterized in that** the cams [55a, 55b] and recesses [35a, 35b] on the cam disc [28] respectively the counter cam disc [29] are positioned such, that when the locking arm [10] is in the starting position [11], the low cam parts [49a] of the cam disc [28] stand on the low cam parts [49b] of the counter cam disc [29].

11. Device according to one of the foregoing claims 6 and following, **characterized in that** the cams [55a, 55b] and recesses [35a, 35b] on the cam disc [28] respectively the counter cam disc [29] are positioned such, that when the locking arm [10] takes up an angle between approximately 10 ° to 85 ° relative to the guide [8], the high cam parts [33a] of the cam disc [28] stand onto the high cam parts [33b] of the counter cam disc [29].

12. Device according to one of the foregoing claims 6 and following, **characterized in that** the cams [55a, 55b] and the recesses [35a, 35b] on the cam disc [28] respectively the counter cam disc [29] are positioned such, that when the locking arm [10] takes up an angle of 90 ° relative to the guide [8], the high cam parts [33a] of the cam disc [28] fall in the recesses [35b] of the counter cam disc [29] and the high cam parts [33b] of the counter cam disc [29] fall in the recesses [35a] of the cam disc [28].

13. Device according to one of the foregoing claims, **characterized in that** the device is provided with a system for generating of a counter force, such as a torsion spring [48], compression spring, gas spring, or such like, which is chosen such, that when the locking arm [10], on being rotated in the direction towards the end position [12], has taken up an angle of approximately 70 ° relative to the guide [8], the system, at a further turning of the locking arm [10] in the direction towards the end position [12]. a counter force is generated of such a magnitude, that the turning of the locking arm [10] to the end position [12] is strongly impeded.

14. Device according to one of the preceding claims, **characterized in that** the device is provided with a control arm [18] by means of which the locking arm [10] can be turned from the starting position [11] to the end position [12] and back again.

15. Device according of the foregoing claim 14 and following, **characterized in that** at the upper side of the axis of rotation [26] a hinge [22] is mounted in which the control arm [18] is provided, in such a way, that the control arm [18] is turnable in a vertical direction.

16. Device according to one of the foregoing claims, **characterized in that** the device is provided with unlocking means by which the counter toothing [32] can be brought out of engagement with the toothing [34].

17. Device according to claim 16, **characterized in that** the means are formed herein, that in the axis of rotation [26] and in the cam disc [28] lead-through openings [60, 61] are provided, extending vertically and in line with each other, in which a pin [23] is movable upwards and downwards, such, that by a moving downwards of the pin [23] this touches at its bottom side against a contact surface [37] provided in the upper surface of the counter cam disc [29], and by means of which the counter cam disc [29] is pushed against spring force [31] downwards and the counter toothing [32] connected to the adjusting organ [51] brought out of engagement with the toothing [34].

18. Device according to claim 17, **characterized in that** means are provided by which the pin [23] can be moved upwards and downwards by a turning in the vertical direction of the control arm [18] .

19. Device according to claim 18, **characterized in that** the means are formed herein, that the pin [23] at the upper side lies against a thrust shaft [25] that is provided to the control arm [18].

20. Device according to claim 16, **characterized in that** the means are formed herein, that a separate control handle [57] is provided, by means of which the adjusting organ [51] can be moved downwards and the counter toothing [32] connected to the adjusting organ [51] can be brought out of engagement with the toothing [34].

21. Device according to one of the claims 14 and following, **characterized in that** the control arm [18] is provided with a handle [57] with a. substantially horizontally extending, rod-shaped handgrip [58], the longitudinal direction of which in the starting position [11] of the locking arm [10] takes up an angle of about 30 ° relative to the guide [8].

22. Device according to claim 18 and following, **characterized in that** means are provided against unintended unlocking of the carriage [9] to the guide [8], which are formed by an interlock axis [36] taken up in the counter cam disc [29], therein horizontally movable between two end positions, a part of which forms the contact surface [37] for the pin [23], and another part of which comprises a hole [38] for a lead-through for the pin [23], wherein, in a first position of the interlock axis [36], the contact surface [37] is positioned in the path of movement of the pin [23], and in the second position of the interlock axis [37] the opening [38] is positioned in the path of movement of the pin [23].

23. Device according to claim 22, **characterized in that** means are provided for surveilling of the position of the interlock axis [36].

## Patentansprüche

1. Vorrichtung [1] zum Arretieren des Rades [3] eines Lastkraftwagens [2] auf einer Fahrspur [5] vor einer Fassade [7] mit einer Be- und Entladeplattform [4], mit einer Führungsschiene [8] parallel und längs der Fahrspur [5] und einem auf der Führungsschiene [8] bewegbaren Schlitten [9] mit einem Arretierarm [10], der zwischen einer Ausgangsposition [11], in der sich der Arretierarm [10] entlang der Fahrspur [5] erstreckt, und einer Endposition [12], in der sich der Arretierarm [10] teilweise über die Fahrspur [5] erstreckt und darin blockierend gegen das Rad [3] eines Lastkraftwagens [2] anliegen kann, beweglich ist, wobei die Führungsschiene [8] und der Schlitten [9] mit zusammenwirkenden Arretiermitteln [32, 34] versehen sind, um eine Arretierung des Schlittens [9] an der Führungsschiene [8] zu bewirken, wobei die Vorrichtung [1] Mittel aufweist, durch welche bei Bewegung des Arretierarms [10] von der Ausgangsposition [11] zur Endposition [12] die Arretiermittel betätigt werden, wobei eines der Verriegelungsmittel an einem Stellelement [51] angebracht ist, das beweglich auf dem Schlitten [9] vorgesehen ist und eine oder mehrere Unebenheiten [33b, 35b, 49b] aufweist, die in der Oberfläche eines Teils davon vorgesehen sind und mit einer oder mehreren Unebenheiten [33a, 35a, 49a] zusammenwirken, die in der Oberfläche eines Teils des Arretierarms vorgesehen sind, so dass durch eine Bewegung des Arretierarms die eine oder mehreren Unebenheiten [33a, 35a, 49a], die auf dem Arretierarm vorgesehen sind, über die eine oder mehreren Unebenheiten [33b, 35b, 49b] am Stellelement [51] bewegt werden, wodurch das Stellelement in Bewegung versetzt wird und das am Stellelement [51] angebrachte Verriegelungsmittel [32] mit dem an der Führungsschiene [8] angebrachten Verriegelungsmittel [34] in Eingriff gebracht wird, wobei mindestens eine Feder [31] vorgesehen ist, die auf der einen Seite am Schlitten [9] und auf der anderen Seite am Stellelement [51] angebracht ist, so dass das In-Eingriff-Bringen des am Stellelement [51] angebrachten Verriegelungsmittels [32] mit dem an der Führungsschiene [8] vorgesehenen Verriegelungsmittel [34] unter Federkraft erfolgt,
**dadurch gekennzeichnet, dass,**
das Stellelement [51] einen Körper an der Oberseite aufweist, an dem die eine oder mehrere Unebenheiten [33b, 35b, 49b] vorgesehen sind, und ferner mit mindestens einer, zwei, drei oder mehr Durchführungsöffnungen [54] versehen ist, durch die ein auf dem Schlitten [9] montierter Führungsstift [30] geführt wird und in Bezug auf die das Stellelement [51] in vertikaler Richtung beweglich ist.

2. Vorrichtung nach Anspruch 1, **dadurch gekennzeichnet, dass** die Durchführungsöffnungen [30] entlang eines Außenumfangs [52] vorgesehen sind.

3. Vorrichtung nach Anspruch 1 oder 2, **dadurch gekennzeichnet, dass** mindestens ein, zwei, drei oder mehr radial abstehende Schenkel [53] entlang des Außenumfangs [52] vorgesehen sind, wobei in jedem eine Durchführungsöffnung [54] vorgesehen ist, durch die ein Führungsstift [30] geführt wird.

4. Vorrichtung nach Anspruch 3, **dadurch gekennzeichnet, dass** die Schenkel [53] entlang des Außenumfangs [52] im Wesentlichen gleichmäßig verteilt sind.

5. Vorrichtung nach Anspruch 1, 2, 3 oder 4, **dadurch gekennzeichnet, dass** die Unebenheiten [33a, 35a, 49a, 33b, 35b, 49b] durch eine oder mehrere Nocken [55a, 55b] und eine oder mehrere Aussparungen [35a, 35b] gebildet werden.

6. Vorrichtung nach Anspruch 5, **dadurch gekennzeichnet, dass** der/die eine oder die mehreren Nocken [55a] und Aussparungen [35a], die am Arretierarm [10] vorgesehen sind, auf einer Nockenscheibe [28] angeordnet sind und der Körper, der am Stellelement vorgesehen ist, durch eine Gegennockenscheibe [29] gebildet wird.

7. Vorrichtung nach Anspruch 6, **dadurch gekennzeichnet, dass** der Arretierarm [10] die Form einer Stange oder eines Balkens [10] hat, dessen eines äußeres Ende dafür vorgesehen ist, in der Endposition gegen das Rad [3] des Lastkraftwagens [2] blockierend anzuliegen, und dessen anderes äußeres Ende die Form einer Drehachse [26] hat, die in dem Schlitten [9] aufgenommen ist, wobei die Nockenscheibe [28] an der Unterseite dieser Drehachse [26] vorgesehen ist.

8. Vorrichtung nach einem der vorstehenden Ansprüche 6 und folgende, **dadurch gekennzeichnet, dass** die Nockenscheibe [28] zwei Nocken [55a] aufweist, die sich gegenüberliegen, wobei jeder Nocken [55a] einen unteren Nockenteil [49a], einen oberen Nockenteil [33a] und einen geneigten Verbindungsteil [56a] aufweist, der sich dazwischen erstreckt, wobei die Nocken [55a] durch Aussparungen [35a] voneinander getrennt sind, die auf beiden Seiten vorgesehen sind.

9. Vorrichtung nach einem der vorstehenden Ansprüche 6 und folgende, **dadurch gekennzeichnet, dass** die Gegennockenscheibe [29] zwei einander gegenüberliegende Nocken [55b] aufweist, wobei jeder Nocken [55b] einen unteren Nockenteil [49b], einen oberen Nockenteil [33b] und einen geneigten Verbindungsteil [56b] aufweist, der sich dazwischen erstreckt, wobei die Nocken [55b] durch Aussparungen [35b] voneinander getrennt sind, die auf beiden Seiten vorgesehen sind.

10. Vorrichtung nach einem der vorstehenden Ansprüche 6 und folgende, **dadurch gekennzeichnet, dass** die Nocken [55a, 55b] und Aussparungen [35a, 35b] auf der Nockenscheibe [28] bzw. der Gegennockenscheibe [29] so angeordnet sind, dass bei in der Ausgangsposition [11] befindlichem Arretierarm [10] die unteren Nockenteile [49a] der Nockenscheibe [28] auf den unteren Nockenteilen [49b] der Gegennockenscheibe [29] stehen.

11. Vorrichtung nach einem der vorstehenden Ansprüche 6 und folgende, **dadurch gekennzeichnet, dass** die jeweiligen Nocken [55a, 55b] und Aussparungen [35a, 35b] auf der Nockenscheibe [28] und der Gegennockenscheibe [29] so angeordnet sind, dass, wenn der Arretierarm [10] einen Winkel zwischen etwa 10 ° und 85 ° zur Führungsschiene [8] einnimmt, die oberen Nockenteile [33a] der Nockenscheibe [28] auf den oberen Nockenteilen [33b] der Gegennockenscheibe [29] aufliegen.

12. Vorrichtung nach einem der vorstehenden Ansprüche 6 und folgende, **dadurch gekennzeichnet, dass** die jeweiligen Nocken [55a, 55b] und die Aussparungen [35a, 35b] auf der Nockenscheibe [28] und der Gegennockenscheibe [29] so angeordnet sind, dass, wenn der Arretierarm [10] einen Winkel von 90 ° zur Führungsschiene [8] einnimmt, die oberen Nockenteile [33a] der Nockenscheibe [28] in die Aussparungen [35b] der Gegennockenscheibe [29] und die oberen Nockenteile [33b] der Gegennockenscheibe [29] in die Aussparungen [35a] der Nockenscheibe [28] fallen.

13. Vorrichtung nach einem der vorstehenden Ansprüche, **dadurch gekennzeichnet, dass** die Vorrichtung mit einem System zur Erzeugung einer Gegenkraft versehen ist, wie einer Torsionsfeder [48], Druckfeder, Gasfeder oder dergleichen, das so gewählt ist, dass, wenn der Arretierarm [10] bei Drehung in Richtung auf die Endposition [12] einen Winkel von etwa 70° zur Führungsschiene [8] eingenommen hat, das System bei einer weiteren Drehung des Arretierarms [10] in Richtung der Endposition [12] eine Gegenkraft erzeugt, die so groß ist, dass die Drehung des Arretierarms [10] in die Endposition [12] stark behindert wird.

14. Vorrichtung nach einem der vorhergehenden Ansprüche, **dadurch gekennzeichnet, dass** die Vorrichtung mit einem Steuerarm [18] versehen ist, mit dem der Arretierarm [10] von der Ausgangsposition [11] in die Endposition [12] und wieder zurückgedreht werden kann.

15. Vorrichtung gemäß dem vorstehenden Anspruch 14 und den folgenden, **dadurch gekennzeichnet, dass** an der Oberseite der Drehachse [26] ein Scharnier [22] angebracht ist, an dem der Steuerarm [18] so angebracht ist, dass der Steuerarm [18] in vertikaler Richtung drehbar ist.

16. Vorrichtung nach einem der vorstehenden Ansprüche, **dadurch gekennzeichnet, dass** die Vorrichtung mit Entriegelungsmitteln versehen ist, durch die die Gegenverzahnung [32] außer Eingriff mit der Verzahnung [34] gebracht werden kann.

17. Vorrichtung nach Anspruch 16, **dadurch gekennzeichnet, dass** die Entriegelungsmittel dadurch gebildet werden, dass in der Drehachse [26] und in der Nockenscheibe [28] Durchführungsöffnungen [60. 61] vorgesehen sind, die sich vertikal und in einer Linie zueinander erstrecken, in denen ein Stift [23] nach oben und unten beweglich ist, so dass durch eine Abwärtsbewegung des Stiftes [23] dieser an seiner Unterseite eine in der Oberseite der Gegennockenscheibe [29] vorgesehene Kontaktfläche [37] berührt und durch die die Gegennockenscheibe [29] gegen Federkraft [31] nach unten gedrückt und die mit dem Stellelement [51] verbundene Gegenverzahnung [32] außer Eingriff mit der Verzahnung [34] gebracht wird.

18. Vorrichtung nach Anspruch 17, **dadurch gekennzeichnet, dass** Mittel vorgesehen sind, mit denen der Stift [23] durch Drehen des Steuerarms [18] in vertikaler Richtung nach oben und unten bewegt werden kann.

19. Vorrichtung nach Anspruch 18, **dadurch gekennzeichnet, dass** die Mittel darin bestehen, dass der Stift [23] an der Oberseite an einer Druckwelle [25] anliegt, die am Steuerarm [18] vorgesehen ist.

20. Vorrichtung nach Anspruch 16, **dadurch gekennzeichnet, dass** die Entriegelungsmittel dadurch gebildet sind, dass ein separater Steuergriff [57] vorgesehen ist, mittels dessen das Stellelement [51] nach unten bewegt und die mit dem Stellelement [51] verbundene Gegenverzahnung [32] außer Eingriff mit der Verzahnung [34] gebracht werden kann.

21. Vorrichtung nach einem der Ansprüche 14 und folgende, **dadurch gekennzeichnet, dass** der Steuerarm [18] mit einem Haltegriff [57] mit einem im Wesentlichen horizontal verlaufenden, stabförmigen Handgriff [58] versehen ist, dessen Längsrichtung in der Ausgangsposition [11] des Arretierarms [10] einen Winkel von etwa 30 ° zur Führungsschiene [8] einnimmt.

22. Vorrichtung nach Anspruch 18 und folgende, **dadurch gekennzeichnet, dass** Mittel gegen unbeabsichtigtes Entriegeln des Schlittens [9] an der Führungsschiene [8] vorgesehen sind, die durch eine Verriegelungsachse [36] gebildet werden, die in der Gegennockenscheibe [29] aufgenommen ist, darin horizontal zwischen zwei Endpositionen beweglich, wobei ein Teil davon die Kontaktfläche [37] für den Stift [23] bildet und ein anderer Teil eine Bohrung [38] für eine Durchführung des Stiftes [23] aufweist, wobei in einer ersten Stellung der Verriegelungsachse [36] die Kontaktfläche [37] im Bewegungsweg des Stiftes [23] liegt und in der zweiten Stellung der Verriegelungsachse [37] die Öffnung [38] im Bewegungsweg des Stiftes [23] liegt.

23. Vorrichtung nach Anspruch 22, **dadurch gekennzeichnet, dass** Mittel zur Überwachung der Position der Verriegelungsachse [36] vorgesehen sind.

## Revendications

1. - Dispositif (1) pour le blocage de la roue (3) d'un camion (2) sur une voie (5) en face d'une façade (7) avec un quai de chargement et de déchargement (4), avec un guide (8) s'étendant parallèlement à la voie (5) et le long de celle-ci, et un chariot (9) mobile sur le guide (8) avec un bras de blocage (10) qui est mobile entre une position de départ (11), dans laquelle le bras de blocage (10) s'étend le long de la voie (5), et une position finale (12), dans laquelle le bras de blocage (10) s'étend partiellement au-dessus de la voie (5) et peut y reposer en blocage contre la roue (3) d'un camion (2), le guide (8) et le chariot (9) comportant des moyens de blocage (32, 34) en coopération pour réaliser un blocage du chariot (9) sur le guide (8),
le dispositif (1) comportant des moyens par lesquels, par déplacement du bras de blocage (10) de la position de départ (11) à la position finale (12), les moyens de blocage sont actionnés,
l'un des moyens de blocage étant monté sur un organe de réglage (51) qui est disposé de manière mobile sur le chariot (9) et qui a une ou plusieurs irrégularités (33b, 35b, 49b) prévues dans la surface d'une partie de celui-ci, qui coopèrent avec une ou plusieurs irrégularités (33a, 35a, 49a) prévues dans la surface d'une partie du bras de blocage, de telle sorte que, par un mouvement du bras de blocage, la ou les irrégularités (33a, 35a, 49a) prévues sur le bras de blocage sont déplacées sur la ou des irrégularités (33b, 35b, 49b) prévues sur l'organe de réglage (51), ce qui entraîne un mouvement de l'organe de réglage et un engagement des moyens de blocage (32) montés sur l'organe de réglage (51) avec les moyens de blocage (34) disposés sur le guide (8), au moins un ressort (31) étant prévu, lequel est monté d' un côté sur le chariot (9) et de l'autre côté sur l'organe de réglage (51), de telle sorte que la mise en engagement des moyens de blocage (32) qui sont montés sur l'organe de réglage (51) avec les moyens de blocage (34) qui sont disposés sur le guide (8) s'effectue sous l'effet d'une force de ressort,
l'organe de réglage (51) comprenant un corps sur le côté supérieur duquel sont prévues la ou les inégalités (33b, 35b, 49b),
**caractérisé par le fait que** l'organe de réglage (51) comporte en outre au moins une, deux, trois ou plusieurs ouvertures de passage (54) à travers chacune desquelles une goupille de guidage (30) montée sur le chariot (9) est guidée, et par rapport à laquelle l'organe de réglage (51) est mobile dans une direction verticale.

2. - Dispositif selon la revendication 1, **caractérisé par le fait que** les ouvertures de passage (30) sont prévues le long d'une circonférence extérieure (52).

3. - Dispositif selon la revendication 1 ou 2, **caractérisé par le fait qu'**au moins une, deux, trois ou plusieurs pattes (53) s'étendant radialement sont prévues, disposées le long de la circonférence extérieure (52), dans chacune desquelles une ouverture de passage (54) est ménagée, une goupille de guidage (30) étant guidée à travers celle-ci.

4. - Dispositif selon la revendication 3, **caractérisé par le fait que** les pattes (53) sont disposées le long de la circonférence extérieure (52), réparties de manière sensiblement égale.

5. - Dispositif selon la revendication 1, 2, 3 ou 4, **caractérisé par le fait que** les irrégularités (33a, 35a, 49a, 33b, 35b, 49b) sont formées par une ou plusieurs cames (55a, 55b) et un ou plusieurs évidements (35a, 35b).

6. - Dispositif selon la revendication 5, **caractérisé par le fait que** la ou les cames (55a) et le ou les évidements (35a) prévus sur le bras de blocage (10) sont compris dans un disque à cames (28) et le corps qui est prévu sur l'organe de réglage est formé par un disque à cames complémentaire (29).

7. - Dispositif selon la revendication 6, **caractérisé par le fait que** le bras de blocage (10) a la forme d'une tige ou poutre (10) dont une extrémité extérieure est destinée à se trouver dans la position finale en blocage contre la roue (3) du camion (2), et dont l'autre extrémité extérieure a la forme d'un axe de rotation (26) qui est monté dans le chariot (9), le disque à cames (28) étant disposé sur le côté inférieur de cet axe de rotation (26).

8. - Dispositif selon l'une des revendications précédentes 6 et suivantes, **caractérisé par le fait que** le disque à cames (28) comporte deux cames (55a) qui sont positionnées à l'opposé l'une de l'autre, chaque came (55a) comprenant une partie de came basse (49a), une partie de came haute (33a) et une partie de liaison inclinée (56a) s'étendant entre elles, les cames (55a) étant séparées l'une de l'autre par des évidements (35a) prévus de part et d'autre.

9. - Dispositif selon l'une des revendications précédentes 6 et suivantes, **caractérisé par le fait que** le disque à cames complémentaire (29) comporte deux cames (55b) qui sont positionnées à l'opposé l'une de l'autre, chaque came (55b) comprenant une partie de came basse (49b), une partie de came haute (33b) et une partie de liaison inclinée (56b) s'étendant entre elles, et. les cames (55b) étant séparées l'une de l'autre par des évidements (35b) prévus de part et d'autre.

10. - Dispositif selon l'une des revendications précédentes 6 et suivantes, **caractérisé par le fait que** les cames (55a, 55b) et les évidements (35a, 35b) sur le disque à cames (28), respectivement le disque à cames complémentaire (29), sont positionnés de telle sorte que, lorsque le bras de blocage (10) est dans la position de départ (11), les parties de came basses (49a) du disque à cames (28) s'appuient sur les parties de came basses (49b) du disque à cames complémentaire (29).

11. - Dispositif selon l'une des revendications précédentes 6 et suivantes, **caractérisé par le fait que** les cames (55a, 55b) et les évidements (35a, 35b) sur le disque à cames (28), respectivement le disque à cames complémentaire (29), sont positionnés de telle sorte que, lorsque le bras de blocage (10) adopte un angle entre environ 10° et 85° par rapport au guide (8), les parties de came hautes (33a) du disque à cames (28) s'appuient sur les parties de came hautes (33b) du disque à cames complémentaire (29).

12. - Dispositif selon l'une des revendications précédentes 6 et suivantes, **caractérisé par le fait que** les cames (55a, 55b) et les évidements (35a, 35b) sur le disque à cames (28), respectivement le disque à cames complémentaire (29), sont positionnés de telle sorte que, lorsque le bras de blocage (10) adopte un angle de 90° par rapport au guide (8), les parties de came hautes (33a) du disque à cames (28) tombent dans les évidements (35b) du disque à cames complémentaire (29) et les parties de came hautes (33b) du disque à cames complémentaire (29) tombent dans les évidements (35a) du disque à cames (28).

13. - Dispositif selon l'une des revendications précédentes, **caractérisé par le fait que** le dispositif comporte un système de génération d'une contre-force, tel qu'un ressort de torsion (48), un ressort de compression, un ressort à gaz ou analogue, qui est choisi de telle sorte que, lorsque le bras de blocage (10), en rotation dans le sens vers la position finale (12), a adopté un angle d'environ 70° par rapport au guide (8), le système génère, lors d'une rotation supplémentaire du bras de blocage (10) dans le sens vers la position finale (12), une contre-force d'une telle amplitude que la rotation du bras de blocage (10) vers la position finale (12) est fortement entravée.

14. - Dispositif selon l'une des revendications précédentes, **caractérisé par le fait que** le dispositif comporte un bras de commande (18) au moyen duquel le bras de blocage (10) peut être entraîné en rotation de la position de départ (11) à la position finale (12) et inversement.

15. - Dispositif selon la revendication précédente 14 et suivantes, **caractérisé par le fait que**, du côté supérieur de l'axe de rotation (26), une charnière (22) est montée, dans laquelle le bras de commande (18) est disposé, de telle sorte que le bras de commande (18) est apte à être entraîné en rotation dans une direction verticale.

16. - Dispositif selon l'une des revendications précédentes, **caractérisé par le fait que** le dispositif comporte des moyens de déblocage par lesquels la denture complémentaire (32) peut être désengagée de la denture (34) .

17. - Dispositif selon la revendication 16, **caractérisé par le fait que** les moyens sont formés de telle sorte que, dans l'axe de rotation (26) et dans le disque à cames (28), des ouvertures de passage (60, 61) sont prévues, s'étendant verticalement et alignées les unes avec les autres, dans lesquelles une goupille (23) est mobile vers le haut et vers le bas de telle sorte que, par un mouvement vers le bas de la goupille (23), celle-ci touche à son côté inférieur une surface de contact (37) prévue dans la surface supérieure du disque à cames complémentaire (29), et au moyen de laquelle le disque à cames complémentaire (29) est poussé à l'encontre de la force de ressort (31) vers le bas et la denture complémentaire (32) reliée à l'organe de réglage (51) est désengagée de la denture (34).

18. - Dispositif selon la revendication 17, **caractérisé par le fait que** des moyens sont prévus, par lesquels la goupille (23) peut être déplacée vers le haut et vers le bas par une rotation dans la direction verticale du bras de commande (18).

19. - Dispositif selon la revendication 18, **caractérisé par le fait que** les moyens sont formés de telle sorte que la goupille (23), du côté supérieur, repose contre un arbre de poussée (25) qui est prévu sur le bras de commande (18).

20. - Dispositif selon la revendication 16, **caractérisé par le fait que** les moyens sont formés de telle sorte qu'une poignée de commande séparée (57) est prévue, au moyen de laquelle l'organe de réglage (51) peut être déplacé vers le bas et la denture complémentaire (32) reliée à l'organe de réglage (51) peut être désengagée de la denture (34).

21. - Dispositif selon l'une des revendications 14 et suivantes, **caractérisé par le fait que** le bras de commande (18) comporte une poignée (57) avec une partie de prise (58) en forme de tige s'étendant sensiblement horizontalement, dont la direction longitudinale dans la position de départ (11) du bras de blocage (10) adopte un angle d'environ 30° par rapport au guide (8).

22. - Dispositif selon la revendication 18 et suivantes, **caractérisé par le fait que** des moyens sont prévus contre un déblocage involontaire du chariot (9) visà-vis du guide (8), qui sont formés par un axe d'interblocage (36) monté dans le disque à cames complémentaire (29), mobile horizontalement entre deux positions finales, dont une partie forme la surface de contact (37) pour la goupille (23), et dont une autre partie comprend un trou (38) pour un passage pour la goupille (23), dans une première position de l'axe d'interblocage (36), la surface de contact (37) étant positionnée dans le trajet de mouvement de la goupille (23) et, dans la seconde position de l'axe d'interblocage (37), le trou (38) étant positionnée dans le trajet de mouvement de la goupille (23).

23. - Dispositif selon la revendication 22, **caractérisé par le fait que** des moyens sont prévus pour une surveillance de la position de l'axe d'interblocage (36).
